# EUROPÄISCHE PATENTANMELDUNG

(11) **EP 3 043 123 A1**
(43) Veröffentlichungstag der Anmeldung: **13.07.2016**
(21) Anmeldenummer: 16152541.5
(22) Anmeldetag: 25.01.2016
(51) Int. Cl.: F24J 2/52

(54) **MEHRTEILIGER DACHHAKEN UND BEFESTIGUNGSSYSTEM**

(30) Priorität: 26.11.2014 DE 202014009488 U
(71) Anmelder: Mounting Systems GmbH, 15834 Rangsdorf (DE)
(72) Erfinder: Redel, Mark, 15827 Blankenfelde-Mahlow (DE)
(74) Vertreter: Eisenführ Speiser

(57) **Zusammenfassung**

Mehrteiliger Dachhaken (200) zum Verbinden einer Profilschiene, insbesondere als Teil eines Befestigungssystems für eine Solarmodulanordnung, mit einer Dachunterkonstruktion, mit einem Befestigungsteil (110) und einem Verbindungteil (120). Das Befestigungsteil (110) ist an der Dachunterkonstruktion befestigbar und das Verbindungsteil (120) ist zur Herstellung eines montierten Zustands an dem Befestigungsteil (110) befestigbar. Dabei ist der mehrteilige Dachhaken (200) dadurch gekennzeichnet, dass das Befestigungsteil (110) ein rechtwinkliges Winkelprofil mit einem ersten und einem zweiten Befestigerschenkel (111, 112) ist, dass der zweite Befestigerschenkel (112) auf einer dem ersten Befestigerschenkel (111) zugewandten Seite ein erstes Sägezahnprofil (114) aufweist, dass das Verbindungsteil (120) einen ersten und einen zweiten Verbinderschenkel (121, 122) aufweist, die zueinander parallele Längsausrichtungen aufweisen und miteinander durch ein Zwischenstück (130) verbunden sind, dass der erste Verbinderschenkel (121) auf einer dem Zwischenstück (130) zugewandten Seite ein zweites Sägezahnprofil (125) aufweist, und dass das erste Sägezahnprofil (114) und das zweite Sägezahnprofil (125) ausgebildet sind, unter einem Anpressdruck auf den zweiten Befestigerschenkel (112) und den ersten Verbinderschenkel (121) im montierten Zustand eine Relativbewegung des Verbindungsteiles (120) und des Befestigungsteiles (110) zu blockieren, und in einem nicht-montierten Zustand eine Relativbewegung des Verbindungsteils (120) und des Befestigungsteils (110) zueinander zuzulassen.

## Beschreibung

Die Erfindung betrifft einen mehrteiligen Dachhaken zum Verbinden einer Profilschiene mit einer Dachunterkonstruktion sowie ein Befestigungssystem für eine Solarmodulanordnung.

Solche Dachhaken dienen insbesondere als Teil eines Befestigungssystems für eine Solarmodulanordnung. Solarmodule, wie insbesondere Photovoltaikmodule oder Sonnenkollektoren , werden bekanntlich häufig auf Dächern montiert. Hierzu stehen grundsätzlich Indach- und Aufdachsysteme zur Verfügung. Während bei einem Indachsystem Solarmodule anstelle von Dachziegeln montiert werden, sind diese bei einem Aufdachsystem über den Dachziegeln angeordnet. Dies erfordert eine sichere Befestigung der Solarmodule an der Dachkonstruktion, wofür typischerweise Dachhaken verwendet werden, welche zwischen den Dachziegeln eingehängt und an der Dachunterkonstruktion befestigt werden.

Die Montage von Solarmodulen erfolgt bei Aufdachsystemen in großer Höhe und oftmals an schrägen Dächern. Dementsprechend ist es wünschenswert, Befestigungssysteme für Solarmodule zur Verfügung zu haben, die möglichst einfach handhabbar sind und mit wenigen Arbeitsschritten montiert werden können. Aus dem Stand der Technik sind bereits Dachhaken für Solarmodulanordnungen bekannt, wie beispielsweise in DE 10 2011 084 215 A1 und DE 20 2008 016 000 U1 beschrieben.

Ein erfindungsgemäßer Dachhaken ist in Anspruch 1 angegeben, ein Befestigungssystem mit einem solchen Dachhaken in Anspruch 8. Den Unteransprüchen können vorteilhafte Ausgestaltungen entnommen werden.

Gemäß einem ersten Aspekt betrifft die Erfindung einen mehrteiligen Dachhaken zum Verbinden einer Profilschiene mit einer Dachunterkonstruktion. Dabei ist die Profilschiene insbesondere als Teil eines Befestigungssystems für eine Solarmodulanordnung ausgebildet. Der Dachhaken weist ein Befestigungsteil, welches an der Dachunterkonstruktion befestigbar ist und ein Verbindungsteil, welches zur Herstellung eines montierten Zustands an dem Befestigungsteil befestigbar ist, auf. Das Befestigungsteil ist ein rechtwinkliges Winkelprofil mit einem ersten und einem zweiten Befestigerschenkel, wobei der zweite Befestigerschenkel auf einer dem ersten Befestigerschenkel zugewandten Seite ein erstes Sägezahnprofil aufweist. Das Verbindungsteil weist einen ersten und einen zweiten Verbinderschenkel auf, die zueinander parallele Ausrichtungen aufweisen und miteinander durch ein Zwischenstück verbunden sind. Der erste Verbinderschenkel weist dabei auf einer dem Zwischenstück zugewandten Seite ein zweites Sägezahnprofil auf. Das erste Sägezahnprofil und das zweite Sägezahnprofil sind ausgebildet, unter einem Anpressdruck auf dem zweiten Befestigerschenkel und dem ersten Verbinderschenkel im montierten Zustand eine Relativbewegung des Verbindungsteiles und des Befestigungsteiles zu blockieren, und in einem nicht montierten Zustand eine Relativbewegung des Verbindungsteiles und des Befestigungsteiles zueinander zuzulassen.

Durch den mehrteiligen Aufbau des Dachhakens ist der Dachhaken für verschiedene Stärken von Dachdeckungen einsetzbar. Gleichzeitig ist die Einstellung der gewünschten Abstände einfach über eine Verschiebung des Verbindungsteils und des Befestigungsteils zueinander möglich, wobei über die Sägezahnprofile sichergestellt wird, dass im montierten Zustand kein Verrutschen mehr möglich ist. Der Dachhaken gemäß dem ersten Aspekt der Erfindung erzielt darüber hinaus eine hohe Belastbarkeit bei möglichst geringem Materialeinsatz. Damit gewährleistet er auch eine besonders günstige Lasteinleitung in die Dachunterkonstruktion. Des Weiteren ergeben sich Vorteile in der Fertigung der relativ einfach zu fertigenden Einzelteile, die dann zum mehrteiligen Dachhaken zusammengesetzt werden können.

Nachfolgend werden Ausführungsformen des Dachhakens beschrieben.

In einer bevorzugten Ausführungsform weist der Dachhaken neben dem Befestigungsteil und dem Verbindungsteil ein Befestigungsmittel auf, das ausgebildet ist, das Befestigungsteil am Verbindungsteil zu befestigen und im montierten Zustand den Anpressdruck auf den zweiten Befestigerschenkel und den ersten Verbinderschenkel auszuüben. Insbesondere eignen sich als Befestigungsmittel Schrauben, Nuten, Steine, Cliphalter oder dergleichen.

Vorteilhafterweise weist der erste Verbinderschenkel ein Durchgangsloch, insbesondere ein Langloch auf, in dem das Befestigungsmittel einfach aufgenommen werden kann.

In einer weiteren Ausführungsform ist das Zwischenstück in einer Seitenansicht betrachtet U-förmig oder J-förmig ausgebildet. In einer weiteren Ausführungsform ist das Zwischenstück in Form eines Hohlkammerprofils ausgebildet. Diese Ausführungsform ermöglicht eine Materialreduzierung bei gleicher Tragfähigkeit, sodass eine besonders günstige Lasteinleitung in die Dachunterkonstruktion erfolgt.

In einer weiteren Ausführungsform des Dachhakens weist der zweite Verbinderschenkel ein Sägezahnprofil oder ein Langloch auf. Auch die Kombination eines Sägezahnprofils mit einem Langloch am zweiten Verbinderschenkel ist vorteilhaft. Mit diesen Ausführungsformen ist eine besonders einfach Montage der Profilschiene am Dachhaken möglich.

Bevorzugt ist am zweiten Befestigerschenkel eine Hammerkopfnut ausgebildet. Die Hammerkopfnut ermöglicht eine einfache und sichere Befestigung des Verbindungsteils am Befestigungsteil. In einer Ausführungsform ist das Befestigungsmittel eine Flachrundschraube mit einem Vierkantansatz. In einer anderen Ausführungsform wird eine Sechskantschraube mit einer Mutter verwendet.

In einer bevorzugten Ausführungsform des Dachhakens sind das Befestigungsteil oder das Verbindungsteil oder sowohl das Befestigungsteil als auch das Verbindungsteil aus Aluminium gefertigt.

Gemäß einem zweiten Aspekt betrifft die Erfindung ein Befestigungssystem mit einem Dachhaken gemäß einem ersten Aspekt der Erfindung oder einer seiner in dieser Anmeldung beschriebenen Ausführungsformen, sowie mit einer Profilschiene, die an dem Dachhaken befestigt ist. Das Befestigungssystem teilt die vorstehend beschriebenen Vorteile des Dachhakens.

Weitere Vorteile und Merkmale der Erfindung werden nachfolgend in Ausführungsbeispielen mit Bezug auf die beigefügte Zeichnung beschrieben. Dabei zeigen
Fig. 1 eine Ausführungsform eines Befestigungsteils eines mehrteiligen Dachhakens gemäß dem ersten Aspekt der Erfindung,
Fig. 2 eine Ausführungsform eines Verbindungsteils eines mehrteiligen Dachhakens gemäß dem ersten Aspekt der Erfindung in einer perspektivischen Ansicht (Fig. 2a) und in einer Schnittansicht (Fig. 2b),
Fig. 3 eine Ausführungsform eines mehrteiligen Dachhakens gemäß dem ersten Aspekt der Erfindung,
Fig. 4 eine Ausführungsform eines Befestigungssystems gemäß dem zweiten Aspekt der Erfindung.

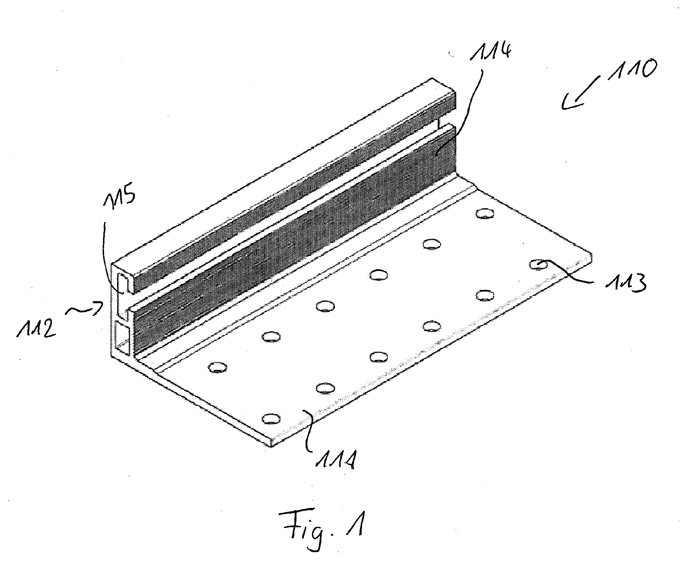

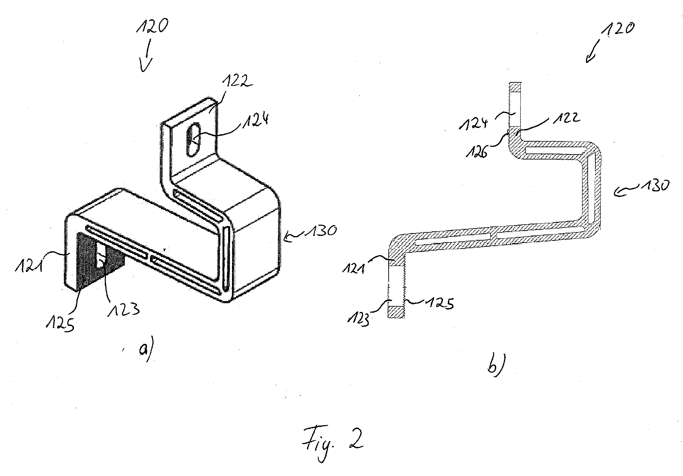

Fig. 1 zeigt ein Befestigungsteil 110 eines mehrteiligen Dachhakens. Das Befestigungsteil 110 ist in Form eines rechtwinkligen Winkelprofils ausgebildet und weist einen ersten Befestigerschenkel 111 und einen zweiten Befestigerschenkel 112 auf. Der erste Befestigerschenkel 111 verfügt über mehrere Durchgangslöcher 113. Zur Verbindung mit einer Dachunterkonstruktion können Befestigungsmittel, wie beispielsweise Schrauben, durch die Durchgangslöcher geführt werden und so das Befestigungsteil 110 an einer Dachunterkonstruktion befestigen. Der zweite Befestigerschenkel weist ein erstes Sägezahnprofil 114 auf. Des Weiteren ist am zweiten Befestigerschenkel eine Hammerkopfnut 115 angeordnet. Im montierten Zustand des Dachhakens ist ein Verbindungsteil, welches in der nachfolgenden Fig. 2 näher beschrieben wird, am Befestigungsteil 110 befestigt. Das Verbindungsteil weist hierzu ein zweites Sägezahnprofil auf. Das erste Sägezahnprofil 114 und das zweite Sägezahnprofil sind dabei derart ausgebildet, dass unter einem auf das Befestigungsteil und das Verbindungsteil ausgeübten Anpressdruck im montierten Zustand eine Relativbewegung des Verbindungsteils und des Befestigungsteils 110 zueinander blockiert ist. In einem nicht montierten Zustand ist dagegen eine Relativbewegung des Verbindungsteils und des Befestigungsteils 110 zueinander möglich.

Fig. 2 zeigt eine Ausführungsform eines Verbindungsteils 120 eines mehrteiligen Dachhakens. In Fig. 2a ist das Verbindungsteil 120 in einer perspektivischen Ansicht dargestellt, in Fig. 2b ist eine Schnittansicht des Verbindungsteils dargestellt. Das Verbindungsteil 120 weist einen ersten Verbinderschenkel 121 und einen zweiten Verbinderschenkel 122 auf. In der in den Figuren 2a und 2b dargestellten Ausführungsform weisen sowohl der erste Verbinderschenkel als auch der zweite Verbinderschenkel ein Langloch 123, 124 auf. Der erste Verbinderschenkel weist auf einer dem Zwischenstück zugewandten Seite ein zweites Sägezahnprofil 125 auf. Der zweite Verbinderschenkel 122 weist ein drittes Sägezahnprofil 126 auf. Das Verbindungsteil 120 ist im mehrteiligen Dachhaken mit einem Befestigungsteil verbindbar. Insbesondere werden der zweite Befestigerschenkel und der erste Verbinderschenkel 121 miteinander verbunden. Das zweite Sägezahnprofil 125 ist daher komplementär zum ersten Sägezahnprofil ausgeführt. Das Verbindungsteil 120 weist darüber hinaus ein Zwischenstück 130 auf, das in der vorliegend gezeigten Ausführungsform als J-förmiges Hohlkammerprofil ausgebildet ist.

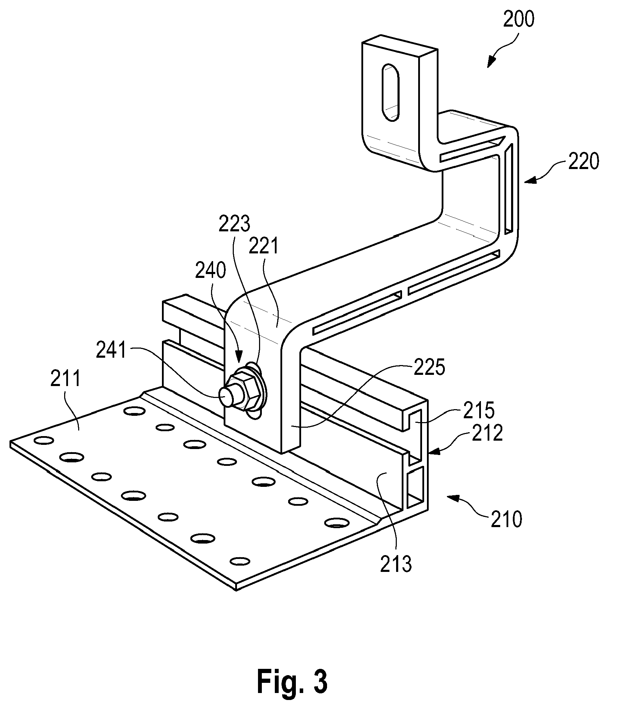

Fig. 3 zeigt eine Ausführungsform eins mehrteiligen Dachhakens 200 gemäß dem ersten Aspekt der Erfindung. Der Dachhaken 200 umfasst ein Befestigungsteil 210, ein Verbindungsteil 220 sowie ein Befestigungsmittel 240. Das Befestigungsmittel befestigt das Befestigungsteil 210 am Verbindungsteil 220. In der gezeigten Ausführungsform ist das Befestigungsmittel 240 eine Flachrundschraube 241 mit einem Vierkantansatz,der in einer am zweiten Befestigerschenkel 212 angeordneten Hammerkopfnut 215 aufgenommen ist. Der Vierkantansatz bietet den Vorteil, dass er sich in der Hammerkopfnut nicht verdrehen kann. Das Verbindungsteil 220 weist ein Langloch 223 auf, in dem die Schraube 241 des Befestigungsmittels 240 aufgenommen ist. Durch Festziehen der Schraube 241 des Befestigungsmittels 240 wird ein Anpressdruck auf den zweiten Befestigerschenkel 212 und den ersten Verbinderschenkel 221 ausgeübt. Das erste und zweite Sägezahnprofil 213, 225 sind dabei derart ausgebildet, dass unter dem Anpressdruck eine Relativbewegung des Verbindungsteils 220 und des Befestigungsteiles 210 blockiert ist. Durch die unterschiedlichen Positionierungen des Befestigungsmittels 240 im Langloch 223 ist die Einstellung verschiedener Abstände des Verbindungsteils zum ersten Befestigerschenkel 211 und damit zur Dachunterkonstruktion möglich.

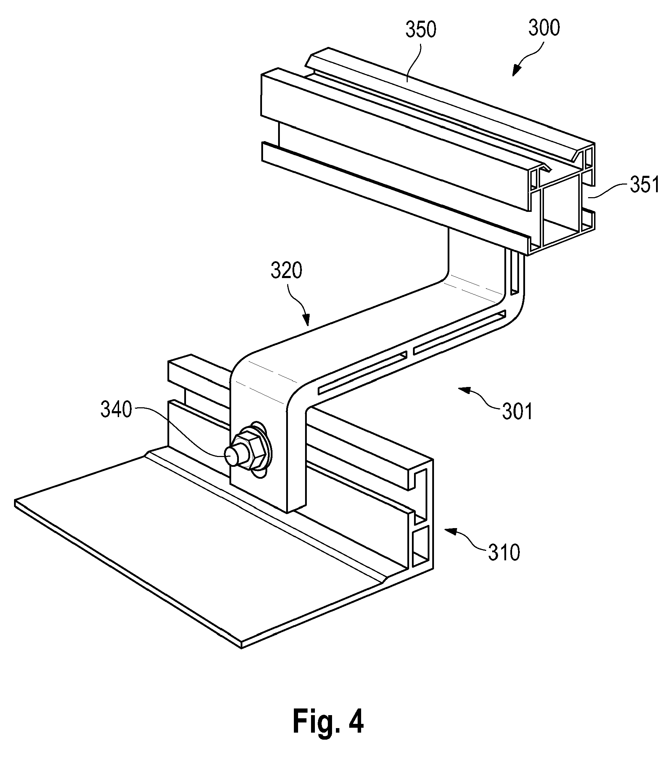

Fig. 4 zeigt eine Ausführungsform eines Befestigungssystems 300 gemäß dem zweiten Aspekt der Erfindung. Das Befestigungssystem 300 umfasst einen Dachhaken 301 mit einem Verbindungsteil 320, einem Befestigungsteil 310 und einem Befestigungsmittel 340. Am zweiten Verbinderschenkel des Verbindungsteiles 320 ist eine Profilschiene 350 befestigt. Die Profilschiene weist eine Hammerkopfnut 351 auf. Die Profilschiene 350 ist mittels eines hier nicht dargestellten Befestigungsmittels in Form einer Schraube mit einem Nutenstein über ein Durchgangsloch am zweiten Verbinderschenkel am Verbindungsteil befestigt.

## Patentansprüche

1. Mehrteiliger Dachhaken (200) zum Verbinden einer Profilschiene, insbesondere als Teil eines Befestigungssystems für eine Solarmodulanordnung, mit einer Dachunterkonstruktion, mit
- einem Befestigungsteil (110), welches an der Dachunterkonstruktion befestigbar ist, und
- einem Verbindungsteil (120), welches zur Herstellung eines montierten Zustands an dem Befestigungsteil (110) befestigbar ist,
**dadurch gekennzeichnet, dass**
- das Befestigungsteil (110) ein rechtwinkliges Winkelprofil mit einem ersten und einem zweiten Befestigerschenkel (111, 112) ist,
- der zweite Befestigerschenkel (112) auf einer dem ersten Befestigerschenkel (111) zugewandten Seite ein erstes Sägezahnprofil (114) aufweist,
- das Verbindungsteil (120) einen ersten und einen zweiten Verbinderschenkel (121, 122) aufweist, die zueinander parallele Längsausrichtungen aufweisen und miteinander durch ein Zwischenstück (130) verbunden sind, und
- der erste Verbinderschenkel (121) auf einer dem Zwischenstück (130) zugewandten Seite ein zweites Sägezahnprofil (125) aufweist, und dass
- das erste Sägezahnprofil (114) und das zweite Sägezahnprofil (125) ausgebildet sind, unter einem Anpressdruck auf den zweiten Befestigerschenkel (112) und den ersten Verbinderschenkel (121) im montierten Zustand eine Relativbewegung des Verbindungsteiles (120) und des Befestigungsteiles (110) zu blockieren, und in einem nicht-montierten Zustand eine Relativbewegung des Verbindungsteils (120) und des Befestigungsteils (110) zueinander zuzulassen.

2. Dachhaken (200) nach Anspruch 1, der ein Befestigungsmittel (240) aufweist, das ausgebildet ist, das Befestigungsteil (210) am Verbindungsteil (220) zu befestigen und im montierten Zustand den Anpressdruck auf den zweiten Befestigerschenkel (212) und den ersten Verbinderschenkel (221) auszuüben.

3. Dachhaken (200) nach Anspruch 1 oder 2, bei dem der erste Verbinderschenkel (221) ein Langloch (223) aufweist.

4. Dachhaken (200) nach mindestens einem der vorstehenden Ansprüche, bei dem das Zwischenstück (130) in einer Seitenansicht betrachtet U-förmig oder J-förmig ausgebildet ist.

5. Dachhaken (200) nach mindestens einem der vorstehenden Ansprüche, bei dem das Zwischenstück (130) in Form eines Hohlkammerprofils ausgebildet ist.

6. Dachhaken (200) nach mindestens einem der vorstehenden Ansprüche, bei dem der zweite Verbinderschenkel (122) ein Sägezahnprofil oder ein Langloch oder ein Sägezahnprofil und ein Langloch aufweist.

7. Dachhaken (200) nach mindestens einem der vorstehenden Ansprüche, bei dem am zweiten Befestigerschenkel (112) eine Hammerkopfnut ausgebildet ist.

8. Dachhaken (200) nach mindestens einem der Ansprüche 2 bis 7, bei dem das Befestigungsmittel (240) eine Flachrundschraube mit einem Vierkantansatz ist.

9. Dachhaken (200) nach mindestens einem der vorstehenden Ansprüche, bei dem das Befestigungsteil (210) oder das Verbindungsteil (220) aus Aluminium gefertigt sind.

10. Befestigungssystem (300) umfassend mindestens einen Dachhaken (200) nach einem der Ansprüche 1 bis 9 und mindestens eine Profilschiene (350), die an dem Dachhaken (200) befestigt ist.
